# EUROPÄISCHE PATENTANMELDUNG

(11) **EP 1 906 174 A1**
(43) Veröffentlichungstag der Anmeldung: **02.04.2008**
(21) Anmeldenummer: 07450168.5
(22) Anmeldetag: 28.09.2007
(51) Int. Cl.: G01N 23/04, B21C 51/00

(54) **Verfahren zur Ermittlung eines Härteprofils in einsatzgehärtetem Stahl**

(30) Priorität: 29.09.2006 AT 16222006
(71) Anmelder: Heinz Ehgartner Gesellschaft m.b.h., 8700 Leoben (AT)
(72) Erfinder: Ehgrtner, Heinz, 8700 Leoben (AT)
(74) Vertreter: Wirnsberger, Gernot

(57) **Zusammenfassung**

Die Erfindung betrifft ein Verfahren zur Ermittlung eines Härteprofils in einem Werkstück (1) mit einer insbesondere einsatzgehärteten Randzone (3), deren Zusammensetzung sich von jener im Werkstückinneren (4) unterscheidet. Erfindungsgemäß ist vorgesehen, dass das Werkstück (1) mit Röntgenstrahlung durchstrahlt und eine Intensität der durch das Werkstück (1) tretenden Röntgenstrahlung gemessen wird und aus den so gewonnenen Messdaten ein Härteprofil im Werkstück (1) ermittelt wird. Dabei ist es von Vorteil, dass die Härteprüfung zerstörungsfrei und mit hoher Genauigkeit erfolgen kann.

## Beschreibung

Die Erfindung betrifft ein Verfahren zur Ermittlung eines Härteprofils in einem Werkstück mit einer insbesondere einsatzgehärteten Randzone, deren Zusammensetzung sich von jener im Werkstückinneren unterscheidet.

Im Einsatz hoch beanspruchte Stahlbauteile wie Zahnräder werden mit harten Außenbereichen ausgebildet, um bei den gegebenen hohen Belastungen einen Verschleiß hintanzuhalten.

Eine Ausbildung einer harten Randzone kann insbesondere durch ein Einsatzhärten erreicht werden. Dabei wird eine Randzone eines Stahls, der einen Kohlenstoffgehalt von bis zu etwa 0,2 Gewichtsprozent aufweist, in einem Kohlenstoff abgebenden Mittel über mehrere Stunden bei etwa 900 °C gehalten. Während dieser Zeit dringt Kohlenstoff in die Randzone ein, welche dadurch härtbar wird. Das Innere des Werkstücks, das auf Grund des niedrigen Kohlenstoffgehaltes nicht härtbar ist, bleibt in seiner chemischen Zusammensetzung unverändert. Beim anschließenden Abkühlen wird daher ein Werkstück mit einem zähen Innen- und einem harten Außenbereich erhalten.

Für eine Qualitätskontrolle und -sicherung müssen einsatzgehärtete Bauteile auf ihre Einhärtetiefe hin überprüft werden. Dies wird im betrieblichen Maßstab durchgeführt, indem eines von mehreren gleichzeitig gehärteten Bauteilen zerschnitten und ein Härtetiefeprofil mittels Mikrohärteprüfung vermessen wird. Hierbei ist allerdings nachteilig, dass für die Qualitätskontrolle ein aufwändig erstelltes Bauteil verbraucht wird. Ein anderer Nachteil ist darin gegeben, dass lediglich eine Stichprobe vorgenommen werden kann, welche nicht unbedingt repräsentativ für alle gehärteten Bauteile sein muss: In einem Härteofen können an unterschiedlichen Orten unterschiedliche Temperaturen und Bedingungen herrschen. Dadurch diffundiert Kohlenstoff unterschiedlich schnell in die einzelnen Bauteile ein, was unterschiedlich tiefe Härteschichten ergeben kann. Diese bleiben jedoch bei einer Stichprobe unerkannt.

Aus den vorstehenden Gründen ist man sehr an einer einfachen, zerstörungsfreien Prüfung von einsatzgehärteten Bauteilen interessiert, die für jedes Bauteil angewendet werden kann. Diesbezüglich besteht ein Ansatz darin, eine Stahlkugel auf eine gehärtete Probe fallen zu lassen und zu messen, wie hoch diese zurückspringt. Die gemessene Höhe ist direkt proportional zur Härte einer Randschicht. Dieses Verfahren ist allerdings insofern limitiert, als dass es sich lediglich bis zu einer Tiefe der Härteschicht von einem Millimeter anwenden lässt. Bei größeren Einhärtetiefen ist die Höhe des Zurückspringens unabhängig von der Tiefe.

Von den Erfindern wurde auch angedacht, eine Einhärtetiefe mittels Ultraschalls im Impuls-Echo-Verfahren zu ermitteln. Es zeigte sich allerdings, dass die durch ein Einsatzhärten herbeigeführten Gefügeunterschiede zu gering sind, um eine ausreichende Reflexion von Ultraschallwellen zu bewirken.

Ausgehend vom Stand der Technik setzt sich die Erfindung das Ziel, ein Verfahren der eingangs genannten Art anzugeben, mit dem bei komplex geformten Werkstücken eine genaue Ermittlung einer Härteschichtdicke bzw. eines Härteverlaufes möglich ist, ohne dass das Werkstück zerstört werden muss, und welches sich auch für Einhärtetiefen von mehr als einem Millimeter eignet.

Dieses Ziel wird bei einem Verfahren der eingangs genannten Art dadurch erreicht, dass das Werkstück mit Röntgenstrahlung durchstrahlt und eine Intensität der durch das Werkstück tretenden Röntgenstrahlung gemessen wird und aus den so gewonnenen Messdaten ein Härteprofil im Werkstück ermittelt wird.

Mit diesem Verfahren kann eine zerstörungsfreie Ermittlung eines Härteprofils im Werkstück durchgeführt werden. Da die Röntgenstrahlung in den gehärteten und nicht gehärteten Bereichen unterschiedlich stark absorbiert wird, kann über eine Auswertung der gemessenen Intensitäten ein Härteprofil exakt ermittelt werden, und zwar auf ± 0,1 Millimeter genau. Da das zu prüfende Werkstück im Ganzen durchstrahlt wird, kommt es auf eine Einhärtetiefe bzw. eine Tiefe der gehärteten Randzone nicht an. Es ist daher auch möglich, Werkstücke mit Einhärtetiefen von beispielsweise 1,2 Millimeter bis 2,5 Millimeter, wie sie bei Zahnrädern häufig gegeben sind, zu vermessen.

Ein anderer Vorteil eines erfindungsgemäßen Verfahrens ist darin zu sehen, dass praktisch jedes Werkstück auf ein Härteprofil hin untersucht werden kann. Es ist somit auch möglich, Unregelmäßigkeiten in der Prozessführung, beispielsweise hohe Temperaturunterschiede im Härteofen, aufzuspüren und einzelne, minderwertige Teile auszuscheiden.

Mit Vorteil wird bei einem erfindungsgemäßen Verfahren das Werkstück in verschiedenen Richtungen durchstrahlt, um ein 3-dimensionales Härteprofil im Werkstück zu ermitteln. Dadurch kann eine Aussagekraft über eine Qualität der Härtung weiter erhöht werden. Zur Durchführung können handelsübliche Computertomografen eingesetzt werden.

Besonders bewährt hat sich das erfindungsgemäße Verfahren für hochwertige Formkörper aus Stahl, insbesondere einsatzgehärtete Formkörper wie Zahnräder.

Weitere Vorteile, Wirkungen und Merkmale der Erfindung ergeben sich aus dem nachfolgenden Ausführungsbeispiel, anhand dessen die Erfindung noch weitergehend erläutert ist.

Es zeigen:
**Fig. 1:** Ein Schnittbild eines 3-dimensionalen Computertomogramms eines Zahnradzahnes;
**Fig. 2:** Ein Schaubild zur mikroskopisch ermittelten Härtezone.

Aus Einsatzstählen wie 18CrNiMo 7-6 oder 20MnCr5 (Bezeichnungen jeweils nach DIN) wurden Zahnräder gefertigt. Die gefertigten Zahnräder wurden in einem Härteofen einsatzgehärtet.

Aus einem gehärteten Zahnrad wurde im Bereich eines Zahnes eine Probe entnommen. Von dieser Probe wurde mittels eines handelsüblichen Computertomografen (Ray Scan 200/Wälischmiller) ein 3-dimensionales Computertomogramm aufgenommen. Danach wurde die gleiche Probe in ein Trägermaterial eingebettet und angeäzt im Mikroskop untersucht.

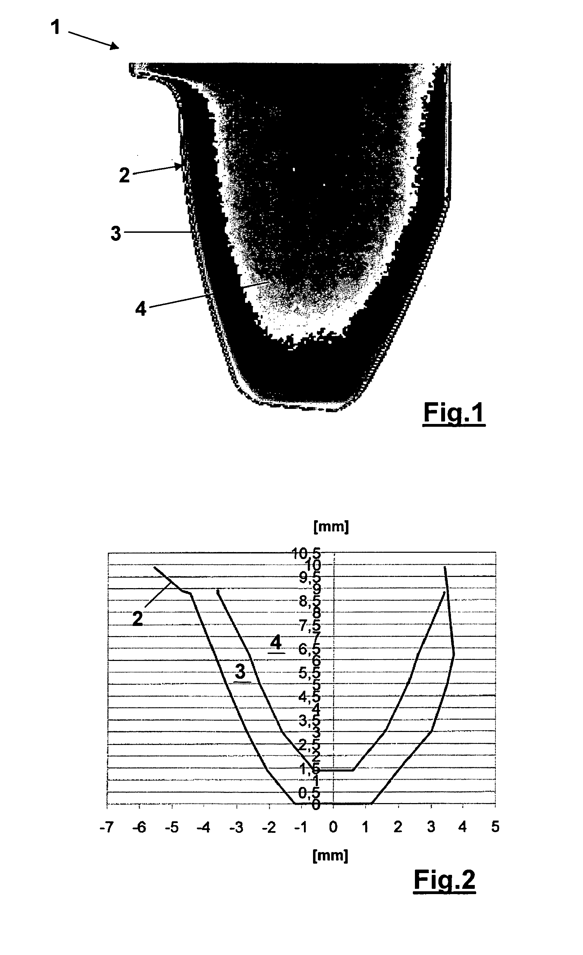

In Fig. 1 ist ein Schnittbild des wie vorstehend beschrieben erhaltenen Computertomogramms gezeigt. Wie ersichtlich, weist der Zahn bzw. das Werkstück **1** eine sich von einer Oberfläche **2** in das Werkstückinnere **4** erstreckende gehärtete Randzone **3** auf. Die Randzone **3** zeigt sich im Schnittbild klar abgegrenzt zum Inneren des Zahnes **1,** welches nicht gehärtet ist. Anhand von Fig. 1 ist demonstriert, dass eine Tiefe der gehärteten Randzone **3** mittels Computertomografie exakt bestimmbar ist.

Dies wird durch die in Fig. 2 dargestellten Ergebnisse bestätigt. Ausmessen der Tiefe einer äußeren Randzone **3** bzw. eines einsatzgehärteten Bereiches im Mikroskop brachte mit Abweichungen lediglich im Bereich von 0,1 Millimeter das gleiche Ergebnis für den Verlauf eines Härteprofils im Werkstückinneren **4.** Dies bestätigt, dass eine computertomografische Untersuchung in der Qualität der Ergebnisse konventionellen Verfahren entspricht, jedoch mit dem Vorteil, dass eine Prüfung zerstörungsfrei durchgeführt werden kann.

Diese Ergebnisse wurden anschließend bei Untersuchungen an ganzen Zahnrädern bestätigt. Dabei zeigte sich außerdem, dass mit Hilfe der eingesetzten Röntgenstrahlung auch Lunker, Seigerungen und Risse im Zahnrad erkennbar sind.

## Patentansprüche

1. Verfahren zur Ermittlung eines Härteprofils in einem Werkstück (1) mit einer insbesondere einsatzgehärteten Randzone (3), deren Zusammensetzung sich von jener im Werkstückinneren (4) unterscheidet, **dadurch gekennzeichnet, dass** das Werkstück (1) mit Röntgenstrahlung durchstrahlt und eine Intensität der durch das Werkstück (1) tretenden Röntgenstrahlung gemessen wird und aus den so gewonnenen Messdaten ein Härteprofil im Werkstück (1) ermittelt wird.

2. Verfahren nach Anspruch 1, **dadurch gekennzeichnet, dass** das Werkstück (1) in verschiedenen Richtungen durchstrahlt wird, um ein 3-dimensionales Härteprofil im Werkstück (1) zu ermitteln.

3. Verfahren nach Anspruch 1 oder 2, **dadurch gekennzeichnet, dass** das Werkstück (1) ein Formkörper aus Stahl ist.

4. Verfahren nach Anspruch 3, **dadurch gekennzeichnet, dass** der Stahl einsatzgehärtet ist.
